Europäisches Patentamt

European Patent Office

Office européen des brevets

(19)

(11) EP 0 736 781 A1

(12) DEMANDE DE BREVET EUROPEEN

(43) Date de publication:
09.10.1996 Bulletin 1996/41

(51) Int Cl.⁶: G01V 1/18

(21) Numéro de dépôt: 96400704.1

(22) Date de dépôt: 01.04.1996

(84) Etats contractants désignés:
FR GB NL

(30) Priorité: 03.04.1995 FR 9503885

(71) Demandeur: COMPAGNIE GENERALE DE
GEOPHYSIQUE
F-91300 Massy (FR)

(72) Inventeur: Omnes, Gildas
94240 l'Hay les Roses (FR)

(74) Mandataire: Martin, Jean-Jacques et al
Cabinet REGIMBEAU
26, Avenue Kléber
75116 Paris (FR)

(54) **Capteur sismique à basse fréquence**

(57)    Capteur sismique caractérisé en ce qu'il comporte un boîtier (1) qui présente au moins une chambre remplie d'un fluide, une masse (3) qui est mobile par rapport audit boîtier (1) et qui s'étend au moins partiellement dans ladite chambre (2), ainsi qu'au moins un détecteur (5A, 5B) qui est disposé dans ladite chambre (2) et qui relève les variations de pression générées sur le fluide de ladite chambre (2) par les déplacements de ladite masse (3).

FIG_1

## Description

La présente invention est relative à un capteur sismique.

Les bandes passantes des géophones et hydrophones couramment utilisés en recherche sismique ne descendent généralement pas en dessous de 10 Hz.

Or, il s'avère souhaitable pour un certain nombre d'applications, notamment en recherche pétrolière, de disposer d'un capteur sismique dont la bande passante descende jusqu'à des fréquences de l'ordre de 1 ou 2 hertz.

Il a déjà été proposé des géophones qui sont des accéléromètres électrodynamiques comportant des ressorts de suspension très rigides et des aimants permanents très forts, dont la bande passante va de 2 à 120 hertz.

Ces géophones sont toutefois d'un coût très important.

La présente invention a pour but de proposer un capteur sismique qui est d'une réalisation simple - et qui est donc peu onéreux - qui permette d'accéder à des fréquences de l'ordre de 1 ou 2 hertz.

A cet effet, l'invention propose un capteur sismique caractérisé en ce qu'il comporte un boîtier qui présente au moins une chambre remplie d'un fluide, une masse qui est mobile par rapport audit boîtier et qui s'étend au moins partiellement dans ladite chambre, ainsi qu'au moins un détecteur qui est disposé dans ladite chambre et qui relève les variations de pression générées sur le fluide de ladite chambre par les déplacements de ladite masse.

Comme on le comprendra aisément, un tel capteur est très peu coûteux par rapport aux aimants permanents.

Il présente en outre une très large bande passante, qui va du continu au kilohertz.

Dans un mode de réalisation avantageux, ladite chambre est une chambre hydraulique dans laquelle la masse est mobile.

Par exemple, la masse s'étend transversalement dans la chambre hydraulique et sépare celle-ci en deux compartiments dans chacun desquels est disposé un détecteur de variations de pression.

Dans une autre variante de réalisation, le capteur comporte en outre une chambre remplie de gaz dans laquelle la masse est mobile, ladite masse étant prolongée par au moins un piston s'étendant à partir de ladite masse jusque dans la chambre hydraulique.

D'autres caractéristiques et avantages de l'invention ressortiront encore de la description qui suit.

Cette description est purement illustrative et non limitative.

Elle doit être lue en regard des dessins annexés sur lesquels :

- la Figure 1 est une vue en coupe schématique d'un capteur sismique conforme à un mode de réalisation possible de l'invention ;
- la Figure 2 est une vue en coupe schématique semblable à la Figure 1, d'un capteur sismique conforme à un autre mode de réalisation possible pour l'invention ;
- les Figures 3a et 3b illustrent la réponse en fréquence d'une part d'un géophone classique de l'art antérieur et d'autre part d'un capteur sismique du type de celui de la Figure 1.

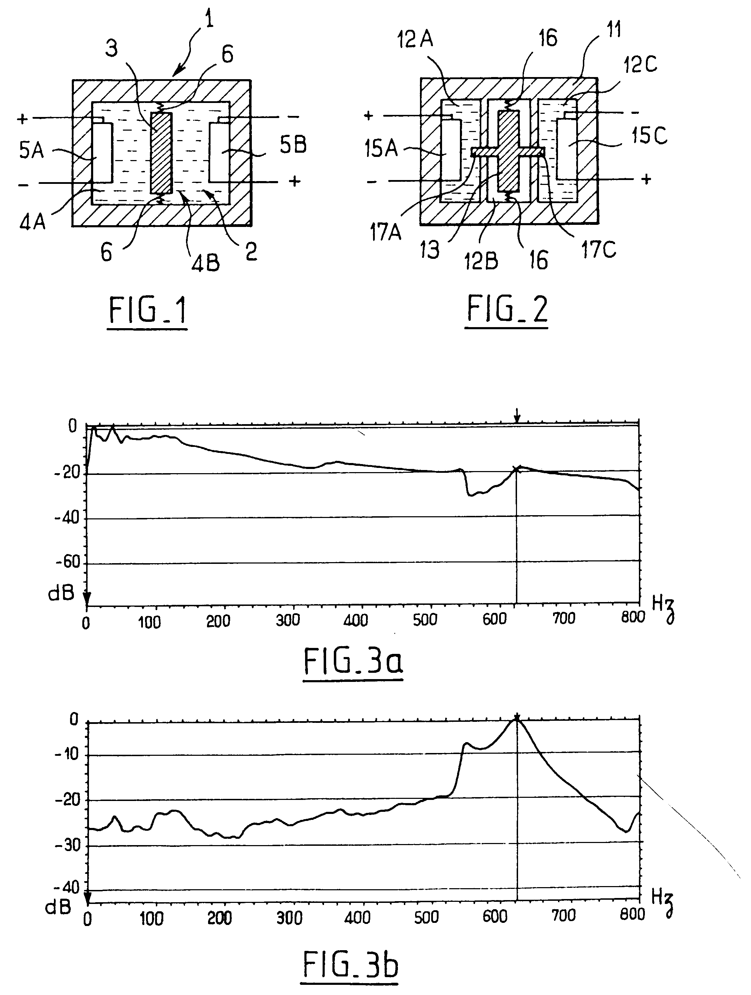

Le capteur sismique représenté sur la figure 1 est principalement constitué d'un boîtier 1 présentant une chambre hydraulique 2 dans laquelle est reçue une masse 3 mobile en translation dans ladite chambre 2.

La chambre hydraulique 2 est de forme intérieure cylindrique. Elle est remplie d'huile.

La masse 3 s'étend transversalement dans ladite chambre 2, perpendiculairement à l'axe de ladite chambre, et définit dans celle-ci deux compartiments 4A et 4B dont les volumes varient de façon complémentaire.

L'un de ces compartiments 4A, 4B communique avec une chambre d'expansion qui n'a pas été représentée.

Un détecteur hydrophone 5A, 5B pour la mesure des variations de pression est disposé dans chacun des deux compartiments 4A et 4B, à leur extrémité opposée à la masse 3. Ces détecteurs 5A, 5B sont avantageusement des détecteurs piézo-électriques.

Les déplacements en translation de la masse 3 dans la chambre 2 génèrent sur le fluide de la chambre des variations de pression qui sont proportionnelles aux accélérations de ladite masse 3.

Les deux capteurs 5A et 5B sont électriquement montés en opposition, de façon que leurs signaux de sortie s'additionnent.

Selon un aspect avantageux de la variante de réalisation illustrée sur la figure 1, la masse 3 est suspendue aux parois définissant la chambre 2 par des ressorts 6. Ces ressorts 6 évitent les frottements entre les parois de la chambre 2 et la masse 3. Ils permettent en outre aux capteurs sismiques conformes à cette variante de mesurer des vibrations se propageant dans d'autres directions que la direction de leur axe. La manipulation de ces capteurs sismiques en est facilitée.

Les deux détecteurs hydrophones 5A, 5B sont par exemple des céramiques piézoélectriques 24 V/bar.

Le boîtier 1 est un boîtier métallique.

Le masse 3 est en un matériau présentant une forte densité, par exemple en tungstène.

Comme on l'aura compris, dans une telle structure de capteur sismique, la masse 3 contribue à abaisser la fréquence propre du fluide et donc à abaisser la bande passante du capteur.

Si K est la constante élastique du fluide, M la masse du piston, la fréquence propre FP du capteur est :

$$(1) \qquad FP = 1/2 \cdot (K/M)^{1/2}$$

Plus M augmente, plus la fréquence propre FP du capteur est basse.

De même, la fréquence propre FP du capteur peut être abaissée en diminuant la constante K, ce à quoi contribue la chambre d'expansion avec laquelle les compartiments 4A, 4B communiquent.

On se réfère maintenant à la variante de réalisation illustrée sur la Figure 2.

Le capteur qui est représenté sur cette figure 2 comprend un boîtier 11 dans lequel sont ménagées trois chambres, 12A, 12B et 12C.

Les deux chambres 12A et 12C sont des chambres hydrauliques qui s'étendent de part et d'autre de la chambre 12B. Le fluide interne de la chambre 12B est un gaz.

Les deux chambres 12A et 12C communiquent avec une même chambre d'expansion (non représentée).

Dans la chambre 12B est disposée une masse mobile 13 de forme plate, qui s'étend transversalement dans ladite chambre, pour définir dans celle-ci deux compartiments.

Cette masse mobile 13 est prolongée de part et d'autre par deux pistons cylindriques de petite section 17A, 17C s'étendant selon l'axe du boîtier 11. Le piston 17A traverse de façon étanche la cloison qui sépare la chambre 12B de la chambre hydraulique 12A et s'étend partiellement à l'intérieur de ladite chambre 12A. De même, le piston 17C traverse de façon étanche la cloison qui sépare la chambre 12B de la chambre hydraulique 12C et s'étend partiellement à l'intérieur de ladite chambre 12C.

En outre, de la même façon que pour la variante de réalisation illustrée sur la Figure 1, la masse 13 est suspendue aux parois internes de la chambre 12B par des ressorts 16.

Des capteurs hydrophones 15A, 15C, sont logés dans chacune des chambres hydrauliques 12A, 12C. Ces capteurs 15A, 15C sont électriquement montés en opposition.

Les oscillations de la masse 13 dans la chambre 12B remplie de gaz sont transformées, par l'intermédiaire des pistons 17A et 17C, en des variations de la pression hydraulique dans les chambres 12A et 12C. Ces variations de pression sont mesurées par les capteurs 15A, 15C.

Comme on l'aura compris, avec une structure de capteur sismique conforme à cette variante, grâce à la chambre de gaz 12B et aux pistons 17A et 17C, la constante K qui intervient dans le calcul de la fréquence propre FP du capteur est abaissée par rapport à la valeur qu'elle prend avec des structures du type de celle illustrée sur la figure 1. La fréquence propre du capteur est elle-même abaissée, de sorte que le capteur présente aux environs de 0 Hz une réponse significative.

A titre illustratif, on a représenté sur les Figures 3A et 3B les courbes d'atténuation (en décibel) en fonction de la fréquence (en hertz) obtenues d'une part avec un géophone de l'art antérieur (Figure 3A) et d'autre part avec un capteur conforme à celui décrit en référence à la Figure 1 (Figure 3B), mais dépourvu de ressorts 6.

Le diamètre interne de la chambre 2 du capteur sismique conforme à l'invention qui a été testé était de 22 mm.

Le jeu entre la masse 3 et les parois intérieures de la chambre 2 était de 0,05 mm par rayon.

La hauteur de la chambre 2 était de 74 mm.

La masse 3 était de 90 grammes.

Le montage de mesure utilisé pour obtenir ces courbes d'atténuation était un montage classique constitué d'un marteau pour la génération du signal mécanique et d'un analyseur de spectre recevant le signal de sortie du capteur (signal électrique correspondant aux sorties des capteurs piézo-électriques additionnés dans le cas du capteur conforme à l'invention).

Comme on peut le voir sur la Figure 3A, la bande passante du géophone de l'art antérieur ne descend que jusqu'à 10 hertz.

Par contre, comme on peut le voir sur la Figure 3B le capteur sismique selon l'invention présente un pic de réponse aux environs de 600 Hz et une atténuation maximum de l'ordre de -20 dB entre 0 hertz et ce pic.

## Revendications

1. Capteur sismique caractérisé en ce qu'il comporte un boîtier (1, 11) qui présente au moins une chambre (2; 12A, 12C) remplie d'un fluide, une masse (3, 13) qui est mobile par rapport audit boîtier (1, 11) et qui s'étend au moins partiellement dans ladite chambre (2; 12A, 12C), ainsi qu'au moins un détecteur (5A, 5B ; 15A, 15B) qui est disposé dans ladite chambre (2; 12A, 12C) et qui relève les variations de pression générées sur le fluide de ladite chambre (2; 12A, 12C) par les déplacements de ladite masse (3, 13).

2. Capteur sismique selon la revendication 1, caractérisé en ce que ladite chambre est une chambre hydraulique (2; 12A, 12C) dans laquelle la masse (3, 13) est mobile.

3. Capteur sismique selon la revendication 2, caractérisé en ce que la masse (3) s'étend transversalement dans la chambre hydraulique (2) et sépare celle-ci en deux compartiments (4A, 4B) dans chacun desquels est disposé un détecteur (5A, 5B) de variations de pression.

4. Capteur sismique selon la revendication 2, caractérisé en ce qu'il comporte en outre une chambre (12B) remplie de gaz dans laquelle la masse (13) est mobile, ladite masse (13) étant prolongée par au moins un piston (17A, 17B) s'étendant à partir de ladite masse (13) jusque dans la chambre hydraulique (12A, 12C).

5. Capteur sismique selon la revendication 4, caractérisé en ce qu'il comporte deux chambres hydrauliques (12A, 12C) de part et d'autre de la chambre remplie de gaz (12B), un détecteur de variations de pression (15A, 15C) étant disposé dans chacune de ces chambres hydrauliques (12A, 12C), la masse (13) étant prolongée par deux pistons s'étendant de part et d'autre de ladite masse (13) jusque dans l'une et l'autre desdites chambres hydrauliques (12A, 12C).

6. Capteur sismique selon l'une des revendications 3 ou 5, caractérisé en ce que les deux détecteurs (5A, 5B ; 15A, 15B) sont montés en opposition de façon que leurs signaux électriques de sortie s'additionnent.

7. Capteur sismique selon la revendication 2 prise seule ou en combinaison avec l'une des revendications précédentes, caractérisé en ce que la chambre hydraulique (2; 12A, 12C) communique avec une chambre d'expansion.

8. Capteur sismique selon la revendication 2 prise seule ou en combinaison avec l'une des revendications précédentes, caractérisé en ce qu'un détecteur de variations de pression (5A, 5B ; 15A, 15B) est un capteur piézoélectrique.

9. Capteur sismique selon l'une des revendications précédentes, caractérisé en ce que la masse (3, 13) est maintenue par des ressorts à l'intérieur du boîtier (1, 11).

10. Capteur sismique selon l'une des revendications précédentes, caractérisé en ce que la masse (3, 13) est en un matériau présentant une forte densité, tel que le tungstène.

FIG.1

FIG.2

FIG.3a

FIG.3b

EP 0 736 781 A1

Office européen
des brevets

**RAPPORT DE RECHERCHE EUROPEENNE**

Numero de la demande

EP 96 40 0704

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 334 296 (HALL JR ERNEST M) 8 Juin 1982<br>* revendications 1,14,15; figures 1,2 *<br>--- | 1,3,8 | G01V1/18 |
| A | GB-A-2 192 457 (TEXAS INSTRUMENTS LTD) 13 Janvier 1988<br>* abrégé; figure 1 *<br>--- | 1 | |
| A | US-A-3 023 612 (ELDER)<br>* figure 4 *<br>----- | 1 | |

|  |  |  | DOMAINES TECHNIQUES RECHERCHES (Int.Cl.6) |
|---|---|---|---|
|  |  |  | G01V |

Le présent rapport a été établi pour toutes les revendications

| Lieu de la recherche | Date d'achèvement de la recherche | Examinateur |
|---|---|---|
| LA HAYE | 11 Juillet 1996 | Anderson, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)